# EUROPEAN PATENT SPECIFICATION

(11) **EP 3 312 138 B1**
(45) Date of publication and mention of the grant of the patent: **12.06.2019**
(21) Application number: 17197116.1
(22) Date of filing: 18.10.2017
(51) Int. Cl.: C01B 3/08, C01B 32/182, C01B 32/184, C01B 32/198

(54) **GRAPHENE-BASED MATERIAL FOR THE GENERATION OF HYDROGEN AND HEAT IN AQUEOUS ENVIRONMENT AND PROCESS FOR THE PRODUCTION THEREOF**
GRAPHENHALTIGES MATERIAL FÜR DIE ERZEUGUNG VON WASSERSTOFF UND WÄRME IN EINER WÄSSRIGEN UMGEBUNG UND VERFAHREN ZU DESSEN HERSTELLUNG
MATÉRIAU À BASE DE GRAPHÈNE POUR LA GÉNÉRATION D'HYDROGÈNE ET DE CHALEUR DANS UN ENVIRONEMENT AQUEUX ET SON PROCÉDÉ DE PRODUCTION

(30) Priority: 18.10.2016 IT 201600104397
(43) Date of publication of application: 25.04.2018
(73) Proprietor: Fondazione Bruno Kessler, 38122 Trento (IT)
(72) Inventor: BARTALI, Ruben, 38123 TRENTO (IT); TESTI, Matteo, 38122 TRENTO (IT); LAIDANI, BENSAADA, Nadhira, 38123 TRENTO (IT); SPERANZA, Giorgio, 38057 MADRANO DI PERGINE VALSUGANA (TN) (IT); MICHELI, Victor, 38017 MEZZOLOMBARDO (TN) (IT); GOTTARDI, Gloria, 38017 MEZZOLOMBARDO (TN) (IT); PUCKER, Georg, 38057 PERGINE VALSUGANA (TN) (IT); CREMA, Luigi, 38056 LEVICO TERME (TN) (IT); COSER, Gianni, 38123 POVO - TRENTO (TN) (IT); FEDRIZZI, Michele, 38123 TRENTO (IT); SETIJADI, Eki Jaya Sasmita, 14240 Jakarta Utara (ID)
(74) Representative: Marchioro, Paolo

(56) References cited:
- WO-A1-2016/158806
- CN-A- 104 445 170
- HOIAAS I M ET AL: "Fabrication of Si(111) crystalline thin film on graphene by aluminum-induced crystallization", APPLIED PHYSICS LETTERS, A I P PUBLISHING LLC, US, vol. 108, no. 16, 18 April 2016 (2016-04-18), XP012207008, ISSN: 0003-6951, DOI: 10.1063/1.4947101 [retrieved on 1901-01-01]
- ABIYE KEBEDE AGEGNEHU ET AL: "Enhanced hydrogen generation by cocatalytic Ni and NiO nanoparticles loaded on graphene oxide sheets", JOURNAL OF MATERIALS CHEMISTRY, vol. 22, no. 27, 1 January 2012 (2012-01-01), pages 13849-13854, XP055357497, GB ISSN: 0959-9428, DOI: 10.1039/c2jm30474k
- GUANCAI XIE ET AL: "Graphene-Based Materials for Hydrogen Generation from Light-Driven Water Splitting", ADVANCED MATERIALS, vol. 25, no. 28, 26 July 2013 (2013-07-26) , pages 3820-3839, XP055331330, DE ISSN: 0935-9648, DOI: 10.1002/adma.201301207
- ZHIGANG MOU ET AL: "RuO2/TiSi2/graphene composite for enhanced photocatalytic hydrogen generation under visible light irradiation", PHYSICAL CHEMISTRY CHEMICAL PHYSICS., vol. 15, no. 8, 14 December 2012 (2012-12-14), pages 2793-2799, XP055357673, GB ISSN: 1463-9076, DOI: 10.1039/c2cp44270a

## Description

### Technical field

The invention relates to a composite material and the use of the same material for the generation of hydrogen and heat in aqueous environment. It further proposes a process for the production of such a composite material.

### Background art

With the growth of sensitivity to environmental protection problems, in recent years a constant development of research has been observed concerning so-called clean energy generating procedures and systems, that is, that do not use fossil fuels or other fuels that generate pollutants substances hazardous to health or difficult to dispose of. The environmental damage is primarily caused by products of the combustion of fossil fuels but also by the technologies for the extraction, treatment and transportation thereof. Most damages are in any case those related to the final use thereof.

The interest for hydrogen falls within this context, one of the main candidates to substitute traditional fuels in the future for the energy and environment-friendly properties thereof.

For hydrogen to become a widespread fuel, it is, however, necessary to solve numerous other problems. Once produced, it must be stored, transported and distributed before being used to produce energy. The main storing forms of hydrogen are, currently, compressed and liquefied hydrogen, although they still require some improvements for a safer and more reliable use.

The storage of hydrogen in gaseous form requires gas compression systems and the observance of safety standards, given the highly explosive nature of air-hydrogen gaseous mixtures.

In addition to safety problems, this storing method is not convenient also from the point of view of the occupied volumes. The storage of hydrogen under liquid form requires compression and strong cooling of gas up to the boiling temperature, which is -253 °C, and, as a consequence, a constant energy expense. Furthermore, once liquefied, a further waste of energy is necessary to keep the hydrogen in this state. Even in liquid form, hydrogen has a density of 0.071 kg/m³, much lower than the density of traditional fuels.

The other serious drawback of this storing system is related to the unavoidable loss of part of the liquid hydrogen. The latter, in fact, is stored at a temperature that corresponds to the boiling point thereof, any passage of heat through the liquid may cause a certain evaporation thereof with consequent efficiency loss of the storing system.

For these reasons and in order to improve the energy density of the hydrogen storage system, the research is directed towards the use of particular chemical hydrides whose feature is that of reacting with water, generating hydrogen and hydroxide of the starting metal *in situ.* In particular, ionic or saline hydrides may be used, i.e. the binary compounds that hydrogen forms with the alkali and alkaline-earth metals, and complex hydrides, ternary compounds in which other elements are also present. The hydrides are however unstable and the reactions are fast and highly exothermic and, therefore, if on one hand it is not necessary to provide heat for the release of hydrogen, on the other hand a careful control of the process is required to avoid the risk of explosion.

Unfortunately, the mechanical complications and the need to produce the hydride with the heat provided by traditional fuels, with consequent increase in the energy balance, make the success of this technology even more doubtful.

The production of hydrogen *in situ* at the same time of use may be realized by reacting water with a metal. Many metals are stable and used at an industrial level, for example Al, Mg and Si which react with water generating not only hydrogen but also great quantities of heat according to at least one of the following reactions:
a) xM + yH₂O → MₓO_{y} + yH₂
b) xM + 2yH₂O → xM(OH)_{2y/x} + yH₂.

Besides hydrogen, the secondary products of the metal-water reactions are metal oxides and/or hydroxides that, in most cases, are inert compounds.

The use of metals for the generation of hydrogen has been in recent years object of research and publications.

In the patent document US5494538, a Mg-Zn-Ni alloy is described which placed in water generates hydrogen, and wherein Ni acts as catalyst while Zn prevents phenomena of corrosion. The quantity of hydrogen generated by the reaction between the Mg-Zn-Ni alloy and water is comprised between 10 and 60 ml/cm²·min when the reaction takes places at a temperature of 100 °C.

I. M. Høiaas et al., in the article entitled "Fabrication of Si(111) crystalline thin film on graphene by aluminum-induced crystallization*"* and A. K. Agegnehu et al., in the Journal of Materials Chemistry, vol. 22, no. 27 of 1 January 2012, describe, respectively, the fabrication of a Si(111) crystalline thin film on graphene by an aluminium-induced crystallization process and the use of a graphene oxide powder coated with nickel particles to generate hydrogen in an aqueous methanol solution.

Many researches about this kind of graphene-based materials for hydrogen evolution from water splitting have been conducted recently and some of them are reported in the review entitled *"Graphene-based materials for hydrogen generation from light-driven water splitting"* by G. Xie et al.

Also, L.Z. Ouyang et al., in the publication entitled "Production of hydrogen via hydrolysis of hydrides in Mg-La system" (Int J Hydrogen Energ 2009), investigate the use of two metal alloys of Mg-La (i.e. Mg₃La and La₂Mg₁₇) for the generation of hydrogen in water. The hydrolysis reaction conducted at room temperature, differently from the previous document, does not require the use of a catalyst. Despite the reaction being fast and with a high yield in terms of hydrogen, the extraction of the minerals from which La is extracted is more difficult with respect to the extraction of equivalent transition metal sources, increasing the costs thereof and impacting the industrial usability of these metal alloys.

Mg is an economical metal and widely available on the market, which reacts with water with the following reaction:

(i) Mg + 2H₂O → Mg(OH)₂ + H₂.

The heat produced by this reaction is 354 KJ mol⁻¹. However, the hydrolysis reaction is quickly interrupted due to the formation of a layer of Mg(OH)₂ which, covering the metal particles that still need to react, prevents the interaction thereof with the water molecules.

The decrease in the size of the metal particles limits the quantity of hydroxide that is deposited on the same particles, thus favouring the continuous generation of hydrogen. Several works, among which Grosjean MH et al., in the publication "Hydrogen production via hydrolysis reaction from ball-milled Mg-based materials" (Int J Hydrogen Energy 2006), propose the use of ball-mills to grind the metals in micro particles in order to increase the yield of hydrogen. However, the mills are highly energy-intensive instrumentations with an energy dispersion in the form of very strong heat and, further, special attention must be given to the cleaning of the grinding chamber and the balls in order to avoid cross-contamination.

Despite the increase in the yield of hydrogen, even the making of metal powders in micrometer scale is not always sufficient to obtain a reactivity of the metal and the completeness of the reaction for the desired application use, for this reason the reaction must be further stimulated increasing the temperature of the process or using activating chemicals, such as acids and bases, often toxic and hazardous for the environment.

### Disclosure of the invention

Given the promising advantages of the generation of hydrogen *in situ* with respect to a typical storing and transportation system of such gas, the object of the present invention is to propose a composite material capable of generating hydrogen and heat *in situ* from safe and widely available sources, such as water.

It is also an object of the invention to propose a composite material that generates hydrogen and heat in room temperature water and without the use of potentially toxic and/or hazardous chemical catalysts.

It is also an object of the invention to propose a composite material that is easily dividable and storable in predefined quantities so as to generate quantities of hydrogen and heat that are defined and suitable for the required use.

A particular importance is given to the object of finding a process for the production of a composite material for the generation of hydrogen and heat, as previously defined, which requires low energy consumption and a high level of cleaning.

It is also an object of the invention that such process for the production of a composite material for the generation of hydrogen and heat does not require the use of chemical reagents hazardous and/or damaging to human health and the environment.

The previously mentioned objects and others that will be better apparent hereinafter are achieved by a composite material as defined in the main claim. Furthermore, the invention relates to the process of producing such a composite material.

Advantageously, the composite material according to the present invention has the structural features of graphene and the typical property of metals of reacting with water molecules, thus generating hydrogen and heat and, therefore, another aspect of the present invention is the use of such a composite material for the generation of hydrogen and heat *in situ,* particularly in aqueous environment.

Embodiment variants of the invention are object of the dependent claims.

### Description of the invention

The present invention comprises a graphene-based composite material, in which the graphene has the surface thereof at least partially covered by a metal film.

Graphene is a carbon-based compound that consists of a planar layer of C atoms with crystal hexagonal cells structure wherein the monatomic layer is a two-dimensional (2D) material characterised by a high surface area. Graphene commonly represents a single layer of graphite structure, however, in the present description, the term graphene refers also to planar structure materials of C atoms with more than one layer.

Due to such a particular geometric shape, it is common in the technical field of graphene to use the term "thickness" with reference to the dimensions of graphene in the form of powder, particles, flakes and the like. In fact, as previously mentioned, graphene is a two-dimensional solid, therefore the most important dimension to characterise it is thickness, which is directly correlated to the number of monatomic layers from which it is composed.

Advantageously, in the composite material according to the present invention, such graphene acts as two-dimensional support for a metal film.

The term film refers to one or more layers of material that can coat another material.

The metal film according to the invention covers at least partially the graphene along the surface thereof and is characterised by a wide surface area. Such a surface area of the metal film according to the invention favours the exposure of metal atoms, which make up such film, to the water molecules, when the composite material according to the invention is placed in aqueous environment, increasing the velocity of the hydrolysis reaction and the generation of H₂ and heat.

According to the preferred embodiment of the invention, such a metal film has a thickness smaller than 1000 nm, preferably between 1 nm and 700 nm, even more preferably between 5 nm and 100 nm.

According to the invention, said metal is magnesium (Mg). Mg is an economical metal and widely available on the market, which reacts with water with the following reaction:

(i) Mg + 2H₂O → Mg(OH)₂ + H₂.

For the materials of the prior art comprising Mg particles, such reaction is quickly interrupted due to the formation of a layer of Mg(OH)₂ on the metal particles that still need to react, preventing the interaction thereof with the water molecules.

The Mg film of the composite material according to the present invention overcomes said drawback since, due to the structural combination between graphene and Mg film, such film has a surface area and therefore a contact surface between Mg atoms and elevated water molecules.

The greater the contact surface is, the greater the number of shocks that may occur between the particles, increasing as a consequence both the velocity of the reaction of hydrolysis and the quantity of H₂ and heat which are generated from the reaction thereof.

The composite material according to the invention may comprise graphene in the form of graphene oxide or in the form of reduced graphene. In the preferred embodiment of the invention, such graphene is in the form of reduced graphene.

Furthermore, according to the preferred embodiment of the invention, said graphene is in the form of powder, such powder having a thickness of between 0.5 nm and 60 nm, preferably between 1 nm and 15 nm, more preferably between 1 nm and 3 nm.

The graphene powder with a thickness <0.5 nm, while having a high surface area, is difficult to handle; moreover, the graphene powder with thickness > 60 nm, while being easy to use, has a reduced surface area that negatively affects the reacting velocity of the metal film atoms with the water molecules. The graphene powder with a thickness comprised within the previously defined values interval, that is with a thickness comprised between 0.5 nm and 60 nm, has the best surface area/managing ease ratio for the production and use of the composite material according to the invention.

Preferably, but not necessarily, the powder particles of such graphene have a width smaller than or equal to 10 µm.

It is not however excluded that in alternative embodiments of the invention, such graphene is not in the form of powder. Embodiment variants of the present invention comprise graphene in the form of granules, pellet, flakes, particle agglomerates, sheets, etc.

Advantageously, the composite material according to the invention is quantifiable, dividable and packageable in predetermined quantities so as to generate defined quantities of hydrogen and heat.

A gram of composite material according to the preferred embodiment may produce between 3.6 and 4.23 kJ of energy in the form of H₂ and 5.31 kJ of energy in the form of heat.

Another aspect of the invention relates to an article comprising an enclosure that contains a predefined quantity of composite material according to the invention.

In a first preferred embodiment of the invention, such enclosure is an enclosure of semi-permeable membrane which contains the composite material. Such semi-permeable membrane, once placed in aqueous environment, allows the water molecules to traverse it and interact with the composite material contained inside, generating H₂ and heat. Preferably, but not necessarily, such semi-permeable membrane enclosures are pods and sachets.

Advantageously, the semi-permeable membrane allows the H₂ and heat generated by the reaction between the metal and water molecules to cross the membrane and to spread in the surrounding environment while the composite material is confined inside the enclosure.

Even more advantageously, the composite material adapted to be contained in the article, inside the semi-permeable membrane enclosure, and potentially recyclable through reducing processes.

In a variant of the invention, such an enclosure for the composite material is in the form of stiff capsule.

Alternatively, such enclosure for the composite material is in the form of soft capsule.

Particularly suitable are the capsules used in the prior art in the pharmaceutical field, for example capsules made with soft gelatine or stiff gelatine, with cellulose polymers or with other water-soluble solid materials adapted to contain the composite material according to the invention.

Advantageously, the composite material according to the invention may be exactly dosed and divided in predefined quantities inside such enclosure of the article according to the invention. It is therefore possible, for the final user, to use an article according to the invention, pre-filled with a quantity of composite material that generates the quantity of H₂ and heat suitable for the required use.

A further aspect of the invention is the use of the composite material or the article comprising an enclosure that contains the composite material, as previously described, to generate hydrogen and heat in aqueous environment, preferably at room temperature.

Advantageously, the composite material according to the present invention reacts in aqueous environment generating H₂ and heat at room temperature, differently from other compounds of the prior art that need high temperatures to trigger the hydrolysis reaction.

Even more advantageously, the hydrolysis reaction between the composite material of the invention and the water does not need activating chemicals such as acids or bases, and/or catalysts often toxic and hazardous for the environment.

Another aspect of the invention relates to the process for the production of the graphene-based composite material comprising the following steps:
i) preparing graphene on a plane, such graphene being selected from reduced graphene or graphene oxide;
ii) depositing a metal film at least partially along the surface of such graphene through physical vapour deposition technique, said metal being magnesium.

In different works of the prior art, from which the patent document US8420042, two main procedures are proposed for the production of graphene and metal-based composite materials: Chemical Vapour Deposition and Electrochemical Deposition. The major limits of these techniques comprise: low velocity of deposition, formation of corrosive reaction by-products, high temperatures for treatment and a high penetrating power.

Differently from the procedures of the above mentioned prior art, it is noted the fact that the process according to the invention comprises a step (ii) of depositing metal by physical vapour deposition technique.

In fact, advantageously, the physical vapour deposition techniques overcome said limits since they operate at a low temperature, with low energy consumption, a high velocity of deposition, a high level of cleaning and a minimum environmental impact. In the preferred embodiment of the invention, the physical vapour deposition technique used is a plasma sputtering technique.

Sputtering is a process by which it obtains an emission of atoms, ions or molecule fragments by a solid material, defined as target, struck by ions. This phenomenon takes place as charged ions strike the surface of the target which for ballistic effect releases atoms that are sprayed on a substrate. The shocks with the ions that bombard the surface of the target may penetrate it to a depth of 3-4 layers of atoms.

According to the process of the invention the target used is a magnesium target with purity ≥90%, preferably ≥95%, even more preferably ≥99%.

In the preferred embodiment of the invention the metal target is magnesium pure at 99.95%.

Advantageously, the process of metal deposition according to the invention allows for modifying the superficial part of the graphene, through deposition of the metal film, without modifying the intrinsic features of the graphene itself.

Even more advantageously, with the process of production according to the invention, the metal is deposited with thickness and controlled atomic fraction.

In the preferred embodiment of the process of the invention, the metal is deposited on the graphene through RF-magnetron sputtering (RF=radio frequency).

It is not excluded that in a variant of the invention the metal film may be deposited on the graphene through DC-sputtering (cathode sputtering by direct voltage) of such metal target.

Furthermore, it is not excluded that the metal film may be deposited on the graphene through RF-plasma-sputtering (RF=radio frequency) of such metal target.

Finally, it is not excluded that other techniques of physical vapour deposition may be used for step ii), for example arc, PLD, etc. techniques.

According to the preferred embodiment of the process of the invention the gas used for the deposition of the metal film on the graphene is argon.

It is not excluded that in a variant of the invention the gas used is xenon or another gas selected from the noble gas group.

According to the preferred embodiment of the invention, the process for the production of composite material takes place at an interval of pressure comprised between 0.04 mbar and 0.07 mbar, preferably at a pressure of 0.050 mbar.

According to the preferred embodiment of the process of the invention, the preparing plane of the graphene is adapted to be placed in vibration and such plane is placed in vibration during step (ii).

Advantageously, the vibration of the plane, and therefore of the graphene arranged thereon, during step ii), introduces a certain regularity in the thickness of the metal film and causes a homogeneous dispersion of the metal on the graphene.

Preferably, but not necessarily, the vibration of such preparing plane of the graphene is performed by means of a piezoelectric device. In the preferred embodiment of the invention, the piezoelectric device generates a vibration with a frequency of about 50 Hz and oscillations of about 100 µm. It is not excluded that in alternative embodiments such piezoelectric device generates vibrations with a frequency between 1 Hz and 1000 Hz.

Furthermore, it is not excluded that in alternative embodiments of the invention such plane is fixed.

According to the preferred embodiment of the invention, step ii) takes place for an interval of time greater than 5 minutes, preferably greater than 60 minutes, even more preferably greater than 120 minutes.

Advantageously, the intervals of time previously specified allow for the deposition of a homogeneous metal film which reacts with water generating high yields of H₂.

Advantageously, the growth of the metal film on the graphene, according to the process of the invention, is a process of Volmer-Weber growth. In the process of Volmer-Weber growth the metal atoms that make up the film are more strongly connected to each other than with the graphene substrate, favouring the reactivity of the metal atoms.

It is not excluded that in alternative embodiments of the process of the invention the growth of the metal film on the graphene is layer by layer.

Variant embodiments of the invention are object of the dependent claims.

The description of the preferred examples of executing the graphene-based composite material, of the process for the production thereof, of the use and of the article comprising such composite material according to the invention by way of a non-limiting example is given with reference to the accompanying drawings.

### Brief description of the drawings

Fig. 1 shows a scanned electric microscopic (SEM) image of the reduced graphene-based composite material, covered by a magnesium film.
Fig. 2 shows the XPS (X-ray photoelectron spectroscopy) spectrum of the reduced graphene-based composite material, covered by a magnesium film.
Fig. 3 shows the SEM-EDX spectrum of the reduced graphene-based composite material, covered by a magnesium film.
Fig. 4 shows the XDR spectrum of the reduced graphene-based composite material, covered by a magnesium film.
Fig. 5 shows the percentage quantity of hydrogen produced by the composite material according to the invention (% hydrogen produced) in function of the time of deposition of the metal film through the process of the invention (time of deposition).
Figs. 6A, 6B and 6C show respectively in microphotographs the production of hydrogen in water by reduced graphene powder, a silicon plate covered by a magnesium film and reduced graphene powder covered by a magnesium film according to the present invention, at a temperature of 25°C.
Fig. 7 shows in a graph the quantity of hydrogen produced (hydrogen production) (µl) per mg of composite material according to the invention in function of time (time) (minutes), at a temperature of 25°C.
Figs. 8A and 8B show in a photograph some examples of articles adapted to contain the composite material according to the invention.

### Description of the execution examples

The composite material and the process for the production of the composite material according to the invention will now be described hereinafter by way of a non-limiting example.

It is noted as preferred graphene the reduced graphene in the form of powder. As previously mentioned, it is also assumable the use of graphene oxide and/or graphene that is not in the form of powder.

### Example 1

The process for producing the composite material is divided in two main steps: preparing the graphene and depositing the Mg film on such graphene.

For the first step, 80 mg of reduced graphene powder (Graphene Supermarket Nanopowder, Grade AO-1) with a thickness of about 3 nm have been arranged on the plane of a plasma deposition instrument (RF-magnetron sputtering).

For the second step, the Mg film has been deposited on the powder of such graphene through bombardment of a Mg metal target (Vacuum Science, purity 99.95%) with argon ions. The step of depositing the film has been performed at an interval of pressure comprised between 0.04 mbar and 0.07 mbar and for a time interval of 60 minutes. During the step of depositing the Mg film, the plane of the plasma deposition instrument has been placed in vibration through a piezoelectric device, generating vibrations with a frequency of about 50 Hz and oscillations of about 100 µm.

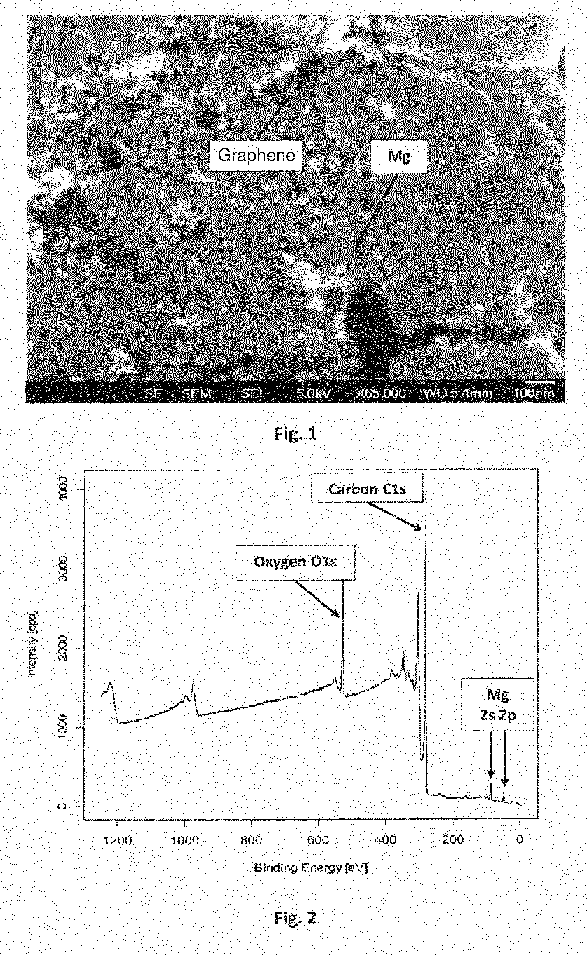

Fig. 1 shows an SEM image of the composite material according to the invention prepared according to the procedure of the invention of the first executive example. It is noted how the Mg film is present with a Volmer-Weber distribution with nucleation of small aggregates on top of the graphene surface.

Fig. 2 shows the XPS spectrum of the composite material according to the invention prepared according to the procedure of the invention of the first executive example. It is noted from the graph the peaks due to the presence of main chemical elements: the C peak is due to the graphene, the Mg peak is due to the metal film and the oxygen peak is due to the contaminations of the reduced graphene and to superficial contaminations of the Mg film.

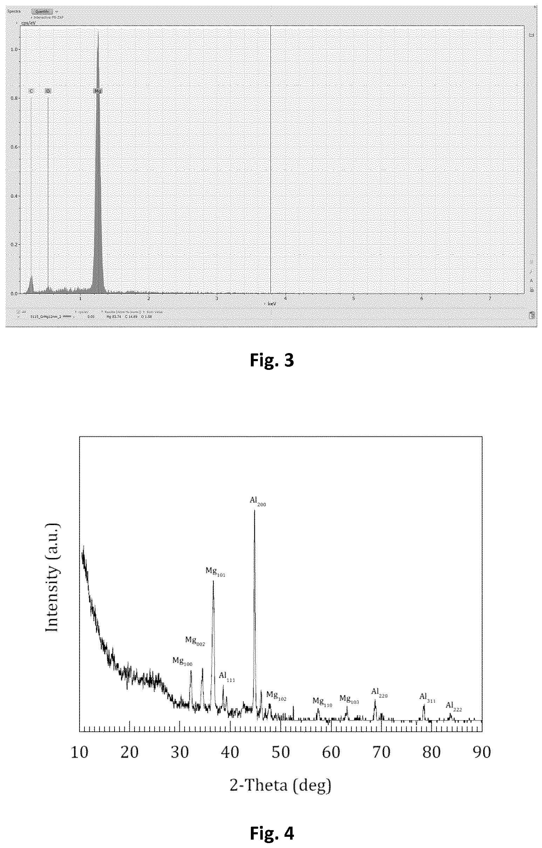

Fig. 3 shows the EDX spectrum of the composite material according to the invention prepared according to the procedure of the invention of the first executive example. As in the XPS graph, the EDX graph shows the peaks of the main chemical elements that make up the composite material of the invention: the graphene C, the film Mg and the oxide O that forms during the operating conditions of the EDX analysis.

Fig. 4 shows the XRD spectrum of the composite material of the invention. The XRD analysis has been performed in Bragg Brentano method (Theta/2Theta) on the composite material of the first example. The resulting XRD diffractogram has been then analysed with the profile fitting analysis technique.

In the diffractogram of the composite material of the invention, the Mg film identification reflections 100, 002, 101, 102, 110 and 103 and a widened peak at 25° attributable to the graphene have been highlighted. It has been further calculated the average dimensions of the Mg crystals using the Sherrer formula and the value obtained is equal to 21.7 nm ± 1.5 nm.

Some Al identification peaks are also visible from the diffractogram. Such Al peaks are not attributable to the composite material according to the invention, but are caused by the operating conditions with which the XRD analysis have been performed in such a way that the sample holder in which the composite material according to the invention for the XRD analysis has been housed was composed of Al.

### Example 2

80 mg of reduced graphene powder (Graphene Supermarket Nanopowder, Grade AO-1) with a thickness of about 3 nm have been arranged on the plane of a RF-magnetron sputtering. Subsequently, a Mg film has been deposited on the graphene powder, through bombardment with argon ions of a Mg metal target (purity 99.95%), at an interval of pressure between 0.04 and 0.07 mbar and for a time interval of 5 minutes. During this step, the plane of the plasma deposition instrument has been placed in vibration through a piezoelectric device, generating vibrations with a frequency of about 50 Hz and oscillations of about 100 µm.

### Example 3

80 mg of reduced graphene powder (Graphene Supermarket Nanopowder, Grade AO-1) with a thickness of about 3 nm have been arranged on the plane of a RF-magnetron sputtering. Subsequently, a Mg film has been deposited on the graphene powder, through bombardment with argon ions of a Mg metal target (purity 99.95%), at an interval of pressure between 0.04 and 0.07 mbar and for a time interval of 15 minutes. During this step, the plane of the plasma deposition instrument has been placed in vibration through a piezoelectric device, generating vibrations with a frequency of about 50 Hz and oscillations of about 100 µm.

### Example 4

80 mg of reduced graphene powder (Graphene Supermarket Nanopowder, Grade AO-1) with a thickness of about 3 nm have been arranged on the plane of a RF-magnetron sputtering. Subsequently, a Mg film has been deposited on the graphene powder, through bombardment with argon ions of a Mg metal target (purity 99.95%), at an interval of pressure between 0.04 and 0.07 mbar and for a time interval of 30 minutes. During this step, the plane of the plasma deposition instrument has been placed in vibration through a piezoelectric device, generating vibrations with a frequency of about 50 Hz and oscillations of about 100 µm.

### Example 5

80 mg of reduced graphene powder (Graphene Supermarket Nanopowder, Grade AO-1) with a thickness of about 3 nm have been arranged on the plane of a RF-magnetron sputtering. Subsequently, a Mg film has been deposited on the graphene powder, through bombardment with argon ions of a Mg metal target (purity 99.95%), at an interval of pressure between 0.04 and 0.07 mbar and for a time interval of 45 minutes. During this step, the plane of the plasma deposition instrument has been placed in vibration through a piezoelectric device, generating vibrations with a frequency of about 50 Hz and oscillations of about 100 µm.

### Analysis of the quantity of H₂ produced and of the reaction velocity of the composite material according to the invention

In order to assess the quantity of H₂ produced by the composite material of the invention, the composite material samples of examples 1 to 5 and a reduced graphene powder sample (Graphene Supermarket Nanopowder, Grade AO-1) with thickness of about 3 nm, free of the metal film coating, have been analysed, one at a time, through volumetric procedure as mentioned hereinafter.

The sample to be examined has been inserted in a cell graduated at constant volume which has been completely filled with water at room temperature and pressure. The volume of gas, and therefore the quantity of H₂ generated by such sample inside said cell, has been measured through graduated cylinder.

The measurement of the quantity of H₂ produced by the sample in question has been then analysed in function of time of deposition of the Mg film on the sample itself.

The obtained results are reported in the following table 1 where the samples of composite material of examples 1, 2, 3, 4 and 5 have been respectively named with the letters F, B, C, D and E, and the reduced graphene sample without Mg film has been named with the letter A.

**Table 1**

| Sample | Time of deposition (minutes) | H₂ µl/mg until saturation | % H₂ |
|---|---|---|---|
| A | 0 | 0 | 0 |
| B | 5 | 8 | 0.058 |
| C | 15 | 20 | 0.15 |
| D | 30 | 50 | 0.37 |
| E | 45 | 122 | 0.9 |
| F | 60 | 410 | 3.0 |

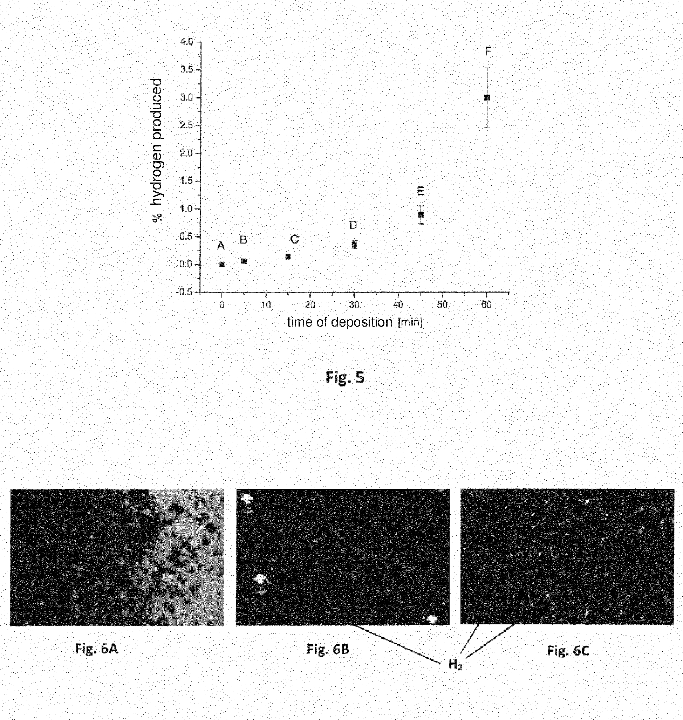

Fig. 5 shows in a graph the percentage production of H₂ in function of time of deposition of the Mg film of the samples in table 1.

From the results, it is clear that the quantity of H₂ generated by the composite material produced according to the process of the invention is directly proportional to the time of deposition of the Mg film.

Furthermore, it is noted that the graphene free of Mg film (sample A) does not react with the water molecules to generate H₂ and therefore, in the composite material according to the invention, the graphene acts as inert support.

This last result is further appreciable in the three microphotographs of fig. 6A, 6B and 6C.

In particular, in fig. 6A, it can be seen that the reduced graphene powder free of a metal film does not generate H₂ when it is immersed in water.

On the other hand, as shown in fig. 6C, the composite material according to the invention reacts with the water molecules generating H₂ and, further, the quantity of H₂ produced from such reaction is greater than that produced by a silicon plate 1x1.5 cm and a thickness of about 400 nm, covered by a Mg film (fig. 6B).

Therefore, the use of a generic inert substrate (such as a silicon plate) covered by a metal film is not a sufficient condition so that such film may react with water generating high quantities of H₂.

Rather, it is the combination of the metal film with the graphene according to the composite material of the invention that advantageously allows the generation of high quantities of H₂ when such composite material is placed in aqueous environment.

It has been then analysed the velocity of the reaction of hydrolysis and of the generation of H₂ of the composite material according to the invention.

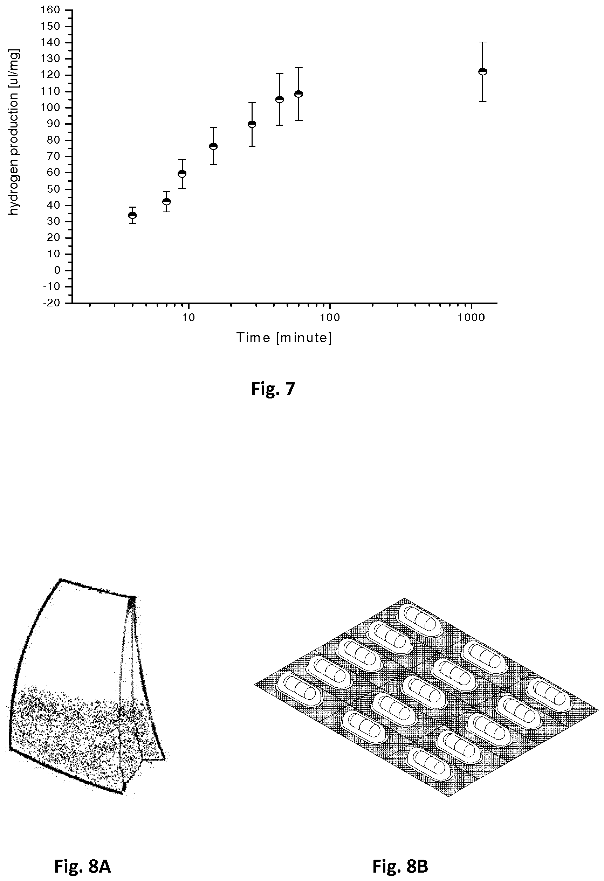

In particular, fig. 7 shows in a graph the production of H₂ of the sample named as E in table 1, in function of time.

Advantageously, the reaction of hydrolysis of the composite material of the invention is a quick reaction. Preferably, a mg of composite material obtainable according to the process of production of the invention and with a time of deposition of the metal film of 45 minutes may generate in water about 35 µl of H₂ after 5 minutes, 75 µl of H₂ after 15 minutes, 90 µl of H₂ after 30 minutes, 105 µl of H₂ after 60 minutes and 122 µl of H₂ when the reaction is at saturation, at a temperature of 25°C.

Finally, fig. 8A and 8B show two examples of articles according to the invention. Such article, in a first preferred embodiment of the invention, comprises a sachet of cellulose containing the composite material of the invention, as shown in fig. 8A. Furthermore, the article may comprise an enclosure in the form of rigid gelatine capsule, such capsule being pre-filled with the composite material according to the invention in the form of powder, as shown in fig. 8B.

Based on what is said, therefore, the graphene-based composite material of the invention achieves all of the intended objects.

In particular, it is achieved the object to propose a composite material capable of generating hydrogen and heat *in situ* from safe and widely available sources, such as water.

Another achieved object of the invention is the implementation of a composite material that generates hydrogen and heat in room temperature water and without the use of potentially toxic and/or hazardous chemical catalysts.

It is also achieved the object of the invention to implement a composite material easily dividable and storable in predefined quantities, which generates quantities of hydrogen and heat defined and suitable to the required need.

A further achieved object is the implementation of a process for the production of a composite material which generates hydrogen and heat, which requires low energy consumption and a high level of cleaning.

Finally, another achieved object of the invention is that such process does not require the use of reacting chemicals hazardous and/or damaging to human health and the environment.

## Claims

1. Graphene-based composite material **characterised in that** said graphene has the surface thereof at least partially covered by a metal film **and in that** said metal is magnesium.

2. Composite material according to the preceding claim, **characterised in that** said graphene is in the form of powder, said powder having a thickness of between 0.5 nm and 60 nm, preferably between 1 nm and 15 nm, more preferably between 1 nm and 3 nm.

3. Composite material according to any one of the preceding claims, **characterised in that** said metal film has a thickness smaller than 1000 nm, preferably between 1 nm and 700 nm, more preferably between 5 nm and 100 nm.

4. Composite material according to any one of the preceding claims, **characterised in that** said graphene is reduced graphene.

5. A process for producing a composite material according to the preceding claims, **characterised in that** it comprises the following steps:
i) preparing graphene on a plane, said graphene being selected from reduced graphene or graphene oxide;
ii) depositing a metal film at least partially along the surface of said graphene through physical vapour deposition technique, said metal being magnesium,
**and in that** during step ii) said plane is placed into vibration.

6. A process for producing a composite material according to the preceding claim, **characterised in that** said physical vapour deposition technique is a plasma sputtering technique.

7. A process for producing a composite material according to any one of claims 5 or 6, **characterised in that** step ii) takes place for a time interval greater than 5 minutes, preferably greater than 60 minutes, even more preferably greater than 120 minutes.

8. An article comprising an enclosure containing a predetermined quantity of composite material according to claims 1 to 4, said article being in the form preferably of a stiff capsule, soft capsule, pod or sachet.

9. Use of composite material according to claims 1 to 4 or of the article according to claim 8 for generating hydrogen and heat in aqueous environment, preferably at room temperature.

## Patentansprüche

1. Verbundwerkstoff auf Graphenbasis, **dadurch gekennzeichnet, dass** das Graphen die Oberfläche davon aufweist, die zumindest teilweise mit einem Metallfilm bedeckt ist **und dass** das Metall Magnesium ist.

2. Verbundwerkstoff nach dem vorhergehenden Anspruch, **dadurch gekennzeichnet, dass** das Graphen in Form von Pulver vorliegt, wobei das Pulver eine Dicke zwischen 0,5 nm und 60 nm, vorzugsweise zwischen 1 nm und 15 nm, stärker bevorzugt zwischen 1 nm und 3 nm, aufweist.

3. Verbundwerkstoff nach einem der vorhergehenden Ansprüche, **dadurch gekennzeichnet, dass** der Metallfilm eine Dicke von weniger als 1000 nm, vorzugsweise zwischen 1 nm und 700 nm, stärker bevorzugt zwischen 5 nm und 100 nm, aufweist.

4. Verbundwerkstoff nach einem der vorhergehenden Ansprüche, **dadurch gekennzeichnet, dass** das Graphen reduziertes Graphen ist.

5. Verfahren zum Herstellen eines Verbundwerkstoffs nach den vorhergehenden Ansprüchen, **dadurch gekennzeichnet, dass** es die folgenden Schritte umfasst:
i) Bereitstellen von Graphen auf einer Ebene, wobei das Graphen ausgewählt ist aus reduziertem Graphen oder Graphenoxid;
ii) Abscheiden eines Metallfilms zumindest teilweise entlang der Oberfläche des Graphens durch physikalische Dampfabscheidetechnik, wobei das Metall Magnesium ist, **und dass** während Schritt ii) die Ebene in Vibration versetzt wird.

6. Verfahren zum Herstellen eines Verbundwerkstoffs nach dem vorhergehenden Anspruch, **dadurch gekennzeichnet, dass** die physikalische Dampfabscheidetechnik eine Plasmasputtertechnik ist.

7. Verfahren zum Herstellen eines Verbundwerkstoffs nach einem der Ansprüche 5 oder 6, **dadurch gekennzeichnet, dass** Schritt ii) für ein Zeitintervall von mehr als 5 Minuten, vorzugsweise von mehr als 60 Minuten, noch stärker bevorzugt von mehr als 120 Minuten, durchgeführt wird.

8. Gegenstand, umfassend eine Umhüllung, die eine vorbestimmte Menge an Verbundwerkstoff nach den Ansprüchen 1 bis 4 enthält, wobei der Gegenstand in der Form vorzugsweise einer steifen Kapsel, einer Weichkapsel, einer Hülse oder eines Beutels vorliegt.

9. Verwendung von Verbundwerkstoff nach den Ansprüchen 1 bis 4 oder des Gegenstands nach Anspruch 8 zum Erzeugen von Wasserstoff und Wärme in wässriger Umgebung, vorzugsweise bei Raumtemperatur.

## Revendications

1. Matériau composite à base de graphène **caractérisé en ce que** ledit graphène a sa surface au moins partiellement couverte par un film métallique **et en ce que** ledit métal est du magnésium.

2. Matériau composite selon la revendication précédente, **caractérisé en ce que** ledit graphène est en forme de poudre, ladite poudre ayant une épaisseur entre 0,5 nm et 60 nm, préférablement entre 1 nm et 15 nm, plus préférablement entre 1 nm et 3 nm.

3. Matériau composite selon l'une quelconque des revendications précédentes, **caractérisé en ce que** ledit film métallique a une épaisseur inférieure à 1000 nm, préférablement entre 1 nm et 700 nm, plus préférablement entre 5 nm et 100 nm.

4. Matériau composite selon l'une quelconque des revendications précédentes, **caractérisé en ce que** ledit graphène est du graphène réduit.

5. Procédé pour produire un matériau composite selon les revendications précédentes, **caractérisé en ce qu'**elle comprend les étapes suivantes:
i) préparer du graphène sur un plan, ledit graphène étant sélectionné entre du graphène réduit ou de l'oxyde de graphène;
ii) déposer un film métallique au moins partiellement le long de la surface dudit graphène au moyen de la technique de dépôt en phase vapeur, ledit métal étant du magnésium, **et en ce que** durant l'étape ii) ledit plan est placé en vibration.

6. Procédé pour produire un matériau composite selon la revendication précédente, **caractérisé en ce que** ladite technique de dépôt en phase vapeur est une technique de pulvérisation par plasma.

7. Procédé pour produire un matériau composite selon l'une quelconque des revendications 5 ou 6, **caractérisé en ce que** l'étape ii) se produit pour un intervalle de temps supérieur à 5 minutes, préférablement supérieur à 60 minutes, encore plus préférablement supérieur à 120 minutes.

8. Article comprenant un espace clos contenant une quantité prédéterminé de matériau composite selon les revendications 1 à 4, ledit article étant, préférablement, en forme de capsule rigide, capsule souple, pochette ou sachet.

9. Utilisation du matériau composite selon les revendications 1 à 4 ou de l'article selon la revendication 8 pour générer de l'hydrogène et de la chaleur dans un environnement aqueux, préférablement à température ambiante.
